# EUROPEAN PATENT APPLICATION

(11) **EP 4 837 888 A1**
(43) Date of publication of application: **11.11.2026**
(21) Application number: 24915787.6
(22) Date of filing: 30.09.2024
(51) Int. Cl.: C03C 3/083, C03C 3/085, C03C 3/095

(54) **GLASS ARTICLE**

(30) Priority: 04.01.2024 KR 20240001441
(71) Applicant: KCC GLASS Corporation, Seoul 06526 (KR)
(72) Inventor: KWON, Oh Hyeok, Gyeongsan-si, Gyeongsangbuk-do 38688 (KR); SHIN, So Young, Busan 48076 (KR); KIM, Sung Jin, Daegu 42042 (KR); KIM, Jin Yong, Seoul 06331 (KR); JANG, Ki Seok, Seoul 06261 (KR)
(74) Representative: Pfenning, Meinig & Partner mbB
(86) International application number: PCT/KR2024/014883
(87) International publication number: WO 2025/146898

(57) **Abstract**

The present invention provides a glass article having excellent mechanical strength. In particular, the present invention enables the hardness of the glass article to be predicted from the composition of the glass article, thereby reducing the time and cost associated with fracture test, while also minimizing variables caused by the measurer or measurement environment, and thus provides a glass article with excellent reliability.

## Description

### [Technical field]

The present invention relates to a glass article having excellent mechanical strength.

### [Background Art]

Glass is being applied in a wide variety of applications, including automotive window screens, mirrors, cover glass for touch displays, solar cells, and even cover windows for flexible displays. Typically, resistance to scratches and impact damage has been improved by using glass with compositions such as aluminosilicate and alkali boroaluminosilicate. However, glasses used for various purposes are increasingly required to have a higher level of mechanical strength, and as disclosed by J. I. Lee et al. in Ceramist, 24, 287-298, methods for strengthening a glass article, such as increasing fracture toughness, reducing a stress intensity factor, and applying a compressive stress, have been used.

The hardness of glass articles, including crack resistance, is typically measured by a method of evaluating the results of generating intermediate/radial cracks using a Vickers diamond indenter (Vickers hardness). In addition, Knoop hardness and 3-point or 4-point bending tests using a universal testing machine (UTM) are used. However, in the case of the above measurement methods, fractual test is inevitably required, which imposes time constraints on performing the measurement for all glass articles under development. In addition, there is a problem that the result value may vary depending on the measurer or the measurement environment.

Accordingly, there is a need for a technology that can predict the hardness of a glass article from the composition of the glass article, thereby reducing the time and cost associated with fracture test, while minimizing variables caused by the measurer or the measurement environment to increase reliability.

### [Description of Invention]

### [Technical Problem]

The present invention provides a glass article having excellent mechanical strength. In particular, the present invention enables the hardness of a glass article to be predicted from the composition of the glass article, thereby reducing the time and cost associated with fracture test while minimizing variables caused by the measurer or the measurement environment, thus providing a glass article with excellent reliability.

### [Technical Solution]

The present invention provides a glass article with a hardness (y) satisfying the following Equation (1): (1) y = k[MgO]+b, where k is 6.2842±2.5616, b is c[Al₂O₃] / [SiO₂]+d, c is 932.5265±139.825, d is 408.87664±23.87966, [MgO] is the content of MgO (mol%) based on the total content of the glass article, [Al₂O₃] is the content of Al₂O₃ (mol%) based on the total content of the glass article, and [SiO₂] is the content of SiO₂ (mol%) based on the total content of the glass article.

### [Advantageous Effects]

The present invention provides an ultra-thin glass having excellent mechanical strength. In particular, according to the present invention, the hardness of a glass article can be predicted from its composition, thereby allowing the hardness of the glass article to be predicted in a nondestructive manner. This reduces the time and cost associated with fracture test, while minimizing variables caused by the measurer or the measurement environment, thereby providing a glass article with excellent reliability. In addition, according to the present invention, the hardness can be controlled based on the glass composition, thereby making it possible to easily manufacture various products tailored to the application of the glass article.

### [Best Mode]

Hereinafter, the present invention will be described in detail. However, the present invention is not limited to the following content, and each component may be modified in various ways or selectively combined as needed. Therefore, it should be understood that the scope of the present invention includes all modifications, equivalents, and alternatives falling within the spirit and scope of the present invention.

Vickers hardness is a value indicating the resistance of a glass article to plastic deformation. It is known that Vickers hardness is closely correlated with the alkaline earth metal ionic radius and the ionic packing density. In particular, the mechanical property associated with ionic radius and packing density is the Young's modulus. The Young's modulus can be calculated using the Makashima-Mackenzie model (M-M model), and the Young's modulus (E) can be expressed by the following Equation.$E = 83.6 \times {V}_{t} \times {\sum }_{t} {G}_{i} {X}_{i} ,$
wherein
*Vₜ* is a packing density, ${V}_{t} = \frac{ρ}{M} {\sum }_{t} {V}_{i} {X}_{i}$, M is a molecular weight, ${V}_{i} = {N}_{A} \frac{4}{3} π \left({XR}_{c}^{2}+{YR}_{0}^{3}\right.$ ), *Xᵢ* is a mole fraction of a composition, R_{c} is a radius of a cation, and R₀ is a radius of an oxygen ion,
*Gᵢ* is a dissociation energy of a composition, and
*Xᵢ* is a mole fraction of a composition.

In the above M-M model, it can be confirmed that the ionic radii of the cations and anions contained in the glass contribute to the packing density, but the Young's modulus refers to the deformation of the glass article due to applied stress, and this is limited to the elastic deformation region. However, since Vickers hardness falls within the regime of plastic deformation, an explanation based solely on the Young's modulus, which is a mechanical property of the elastic deformation regime, is insufficient.

Meanwhile, regarding the relationship between Al and R₂O in aluminosilicate-based glass, an Anderson-Stuart model for ionic conduction has been proposed based on the activation energy and Coulomb energy required during ionic conduction, and the effect on ionic conduction due to the deformation of the glass structure is known. Such prior art has a high correlation with the ion exchange depth related to ion movement rather than the generation of compressive stress due to ion exchange-based chemical strengthening. Recently, attempts have been made to explain the cause of compressive stress in relation to the glass structure, and although the trend of compressive stress in chemically strengthened glass can be understood, deriving accurate result values has not been possible.

In the present invention, it was considered that chemical strengthening is achieved through ion exchange and that compressive stress can occur due to changes in the glass structure caused by the exchanged ions during ion exchange. Specifically, the composition of glass was classified into glass network former, glass network intermediate, and glass network modifier using the classification method proposed by Kuan-Han Sun in 1947 (Sun classification method), and ion conduction by the glass network modifier according to the Al₂O₃-R₂O relationship and the Anderson-Stuart model was considered. In addition, considering the causes of compressive stress generation, the Al₂O₃-SiO₂ relationship and the Al₂O₃-R₂O relationship were considered. Based on comprehensive consideration of the above facts, experiments were conducted by categorizing the glass compositional elements classified by the Sun classification method according to their absolute amounts and ratios. As a result, factors that can significantly affect ionic conduction and the glass structure were identified, and it was also confirmed that the relationship between them exhibits linearity. From the above points, it was confirmed that the present invention can accurately calculate Vickers hardness based solely on the composition of the glass.

The glass article of the present invention satisfies the following Equation (1) for a hardness (y).$y = k \left[MgO\right] + b$ (1)
wherein
k is 6.2842±2.5616,
b is c[Al₂O₃] / [SiO₂]+d,
c is 932.5265±139.825,
d is 408.87664±23.87966,
[MgO] is the content of MgO (mol%) based on the total content of the glass article,
[Al₂O₃] is the content of Al₂O₃ (mol%) based on the total content of the glass article, and
[SiO₂] is the content of SiO₂ (mol%) based on the total content of the glass article.

In the present invention, the hardness (y) of a glass article is proportional to [MgO] and [Al₂O₃] / [SiO₂]. Depending on [MgO] and [Al₂O₃] / [SiO₂], the atomic structure and the number of alkali metal ions inside the glass change, and as a result, the hardness is affected.

The glass article of the present invention may include SiO₂, Al₂O₃, R₂O (where R = Li⁺, Na⁺, or K⁺), and R'O (where R' = Mg, Ca, Sr, or Ba). The glass article of the present invention does not include highly hygroscopic glass-forming oxides such as B₂O₃, P₂O₅, etc.

SiO₂ acts as a glass-forming oxide in an aluminosilicate-based glass article, playing a role in providing the rigidity of the glass.

The glass article may include 40 to 80 mol%, for example, 55 to 75 mol% of SiO₂, based on the total content of the glass article. When the content of SiO₂ is less than the above-mentioned range, the strength of the glass may decrease, and when it exceeds the above-mentioned range, the melting temperature increases, which may impair the formability of the glass melt.

Al₂O₃ functions as an intermediate, a charge balancer, or a glass-forming oxide in the aluminosilicate-based glass article, and plays a role in providing the rigidity of the glass together with SiO₂. The content of Al₂O₃ and alkali metal oxides R₂O (where R = Li⁺, Na⁺, or K⁺) affects the structure and properties of the aluminosilicate-based glass. When Al₂O₃ is included in the glass composition in an excess amount relative to R₂O, Al₂O₃ no longer substitutes for Si⁴⁺ but changes into Al⁵⁺ and Al⁶⁺ forms, which may induce crystallization of the glass as the liquid fragility index (m) increases. In addition, as the melting temperature increases with increasing Al₂O₃ content, the formability of the glass melt may be impaired. On the other hand, when there is an excess amount of R₂O compared to Al₂O₃, Al ions are substituted for Si to form AlO₄⁻, Li, Na, and K ions bond with AlO₄⁻ to compensate for the charge, and alkali metal ions that do not participate in chemical strengthening break the Si-O bonds of SiO₂, which is a glass network former, thereby causing a reduction in the free volume inside the glass, and as a result, can reduce compressive stress and ion exchange depth.

The glass article may include 5 to 25 mol%, for example, 8 to 15 mol% of Al₂O₃, based on the total content of the glass article. When the content of Al₂O₃ is less than the above-mentioned range, the strength of the glass may decrease, and when it exceeds the above-mentioned range, crystallization of the glass may occur or the melting temperature may increase, which may impair the formability of the glass melt.

Alkali metal oxides R₂O (where R = Li⁺, Na⁺, or K⁺) function as modifiers or charge compensators. R₂O breaks the bonds of a glass former to break Si-O bonds, thereby forming non-bridging oxide groups, and as a result, it serves to lower the melting point and viscosity of the glass melt and affects the coefficient of thermal expansion (CTE) of the glass melt. For example, Na₂O and K₂O may be used in combination as alkali metal oxides, which can increase acid resistance.

The glass article may include 8 to 30 mol%, for example 10 to 25 mol% of an alkali metal oxide, based on the total content of the glass article. For example, the glass article may include 8 to 20 mol%, for example 9 to 18 mol% of Na₂O and 0 to 10 mol%, for example 0 to 5 mol% of K₂O, based on the total content of the glass article. When the content of Na₂O is below the above-mentioned range, the compressive stress may be lowered as the number of alkali metal ions participating in chemical strengthening is insufficient due to the low Na content inside the glass, and when it exceeds the above-mentioned range, the Si-O bonds of SiO₂ are broken, which causes a reduction in the free volume inside the glass, thereby lowering the ion exchange depth. When K₂O content is below the above-mentioned range, acid resistance may be weakened, and when it exceeds the above-mentioned range, the compressive stress and hardness due to chemical strengthening may be lowered as the Na content inside the glass decreases.

Alkaline earth metal oxides R'O (where R' = Mg, Ca, Sr, or Ba) may affect Al-avoidance violation, and as a result, may cause a change in the internal structure of the aluminosilicate-based glass.

For example, the alkaline earth metal oxides may include MgO. Since Mg has a lower atomic number than other alkaline earth metals, MgO can reduce density, does not lower the deformation point, and can significantly improve the melting property of glass by lowering high-temperature viscosity. However, Mg²⁺ has a higher ionic field strength compared to Ca²⁺, Sr²⁺, and Ba²⁺, and facilitates the formation of 5- and 6-coordinated aluminum species in Al₂O₃. In aluminosilicate compositions, Al₂O₃ functions as a glass network former or intermediate oxide to form a strong network structure of glass, but when it has coordination numbers 5- and 6-, it causes crystallization of the glass. Therefore, when MgO is included, it causes a violation of the Al-avoidance law in the internal structure of the aluminosilicate-based glass, inducing Si-O-Si and Al-O-Al bonds, and thus including a large amount thereof may cause the precipitation of Mg-Si-O series crystals. In addition, high ionic field strength reduces the free volume within the glass, and as a result, it becomes difficult for K⁺ ions, which have a larger atomic radius compared to Na⁺ contained within the glass, to penetrate into the glass. This can lead to a phenomenon where the compressive stress generated by substituted K⁺ ions is lowered or the ion exchange depth is reduced. On the other hand, when CaO, SrO, and BaO are included, Si-O-Al bonds may be present more frequently than Al-O-Al and Si-O-Si bonds in the internal structure of the aluminosilicate-based glass.

Vickers hardness is correlated with the ionic radius of the alkaline earth metals, and depending on the ionic radius of the alkaline earth metals, Vickers hardness can increase in the order of Mg > Ca > Sr > Ba. In particular, MgO is known as a component that increases the Young's modulus, Vickers hardness, and fracture toughness.

The glass article may include 0 to 10 mol%, for example 0 to 8 mol% of an alkaline earth metal oxide, based on the total content of the glass article. For example, the glass article may include 0 to 10 mol%, for example, 0 to 8 mol% of MgO, based on the total content of the glass article. When the content of MgO is less than the above-mentioned range, melting of the glass material may become difficult, and when it exceeds the above-mentioned range, the free volume inside the glass is reduced, which may make chemical strengthening difficult.

For example, the glass article of the present invention may include 40 to 80 mol% of SiO₂, 5 to 25 mol% of Al₂O₃, 8 to 20 mol% of Na₂O, 0 to 10 mol% of K₂O, and 0 to 10 mol% of MgO, based on the total content of the glass article.

The glass article of the present invention may further include ZnO, SnO₂, CaO, SrO, BaO, and a mixture thereof.

ZnO has the same ionic field strength as MgO, and when ZnO is included, many Si-O-Al bonds may be present in the internal structure of the aluminosilicate-based glass. The glass article may include 0 to 10 mol%, for example, 0 to 8 mol% of ZnO, based on the total content of the glass article. When the content of ZnO is less than the above-mentioned range, melting of the glass material may become difficult, and when it exceeds the above-mentioned range, crystallization may occur.

For example, the glass article of the present invention may include MgO, ZnO, or a mixture thereof. As another example, the glass article of the present invention may include MgO and ZnO. Since ZnO has the same ionic field strength as MgO and has a similar glass structure, it plays a similar role in developing the properties of the glass. However, since a devitrification phenomenon may be caused during the manufacture of glass as the content of ZnO increases, the content of ZnO included in the glass article is preferably 50 mol% or less, for example, 25 mol% or less, and as another example, 10 mol% or less, relative to the content of MgO.

For example, the glass article may include 0 to 10 mol%, for example 0 to 8 mol% of ZnO, 0 to 0.5 mol%, for example 0 to 0.3 mol% of SnO₂, 0 to 10 mol%, for example 0 to 8 mol% of CaO, 0 to 10 mol%, for example 0 to 5 mol% of SrO, and 0 to 10 mol%, for example 0 to 8 mol% of BaO, based on the total content of the glass article.

For example, the glass article of the present invention satisfies the following Equation (2).$\left[ZnO\right] + \left[{Y}_{2}{O}_{3}\right] + \left[{TiO}_{2}\right] + \left[{ZrO}_{2}\right] + \left[{Nb}_{2}{O}_{5}\right] \leq \left[MgO\right] / 2$ (2)
wherein
[ZnO] is the content of ZnO (mol%) based on the total content of the glass article,
[Y₂O₃] is the content of Y₂O₃ (mol%) based on the total content of the glass article,
[TiO₂] is the content of TiO₂ (mol%) based on the total content of the glass article,
[ZrO₂] is the content of ZrO₂ (mol%) based on the total content of the glass article,
[Nb₂O₅] is the content of Nb₂O₅ (mol%) based on the total content of the glass article, and
[MgO] is the content of MgO (mol%) based on the total content of the glass article.

For example, the glass article of the present invention satisfies the following Equation (3).$\left[{Al}_{2}{O}_{3}\right] / \left[{R}_{2}O\right] < 1$ (3)
wherein
[Al₂O₃] is the content of Al₂O₃ (mol%) based on the total content of the glass article,
[R₂O] is the content of R₂O (mol%) based on the total content of the glass article, and
R is one or more elements selected from the group consisting of Li, Na, and K.

The content of Al₂O₃ and alkali metal oxides R₂O (where R = Li⁺, Na⁺, or K⁺) affects the structure and properties of the aluminosilicate-based glass. When Al₂O₃ is included in the glass composition in an excess amount relative to R₂O, Al₂O₃ no longer substitutes for Si⁴⁺ but changes into Al⁵⁺ and Al⁶⁺ forms, which may induce crystallization of the glass as the liquid fragility index (m) increases. In addition, as the melting temperature increases with increasing Al₂O₃ content, the formability of the glass melt may be impaired. On the other hand, when there is an excess amount of R₂O compared to Al₂O₃, Al ions are substituted for Si to form AlO₄⁻, Li, Na, and K ions bond with AlO₄⁻ to compensate for the charge, and alkali metal ions that do not participate in chemical strengthening break the Si-O bonds of SiO₂, which is a glass network former, thereby causing a reduction in the free volume inside the glass, and as a result, can reduce the ion exchange depth. Excellent hardness can be secured when [Al₂O₃] / [R₂O] ≤ 1 is satisfied. In particular, when [Al₂O₃] / [R₂O] < 0.8, or as another example, 0.5 < [Al₂O₃] / [R₂O] < 0.7, excellent compressive stress and hardness, as well as high formability, can be secured.

For example, the glass article of the present invention satisfies the following Equation (4).$\left[GNI\right] / \left[{SiO}_{2}\right] < 0.5$ (4)
wherein
R is one or more elements selected from the group consisting of Li, Na, and K, and
[GNI] is the content (mol%) of a glass network intermediate (GNI) based on the total content of the glass article, where GNI is an intermediate oxide having an e value of 60 to 80, e is E/n, E is a dissociation energy required to completely decompose 1 mole of an oxide (MO_{y/x}), and n is an oxygen coordination number of an M atom. For example, GNI may include oxides of Al, Zn, Ti, Nb, Mn, Fe, Zr, Mo, W, and Ta.

The content of GNI and SiO₂ affects the structure and properties of the aluminosilicate-based glass. As the [GNI] / [SiO₂] ratio increases, the number of bridging oxygen atoms decreases, and the number of non-bridging oxygen atoms increases. As non-bridging oxygen increases, it can lead to a reduction in the free volume inside the glass, which can consequently reduce its hardness. When [GNI] / [SiO₂] ≤ 0.5 is satisfied, excellent compressive stress can be secured.

For example, the glass article of the present invention satisfies the following Equation (5).$\left[ZnO\right] < \left[MgO\right] / 2$ (5)
wherein
[ZnO] is the content of ZnO (mol%) based on the total content of the glass article, and
[MgO] is the content of MgO (mol%) based on the total content of the glass article.

The hardness (y) of the glass article of the present invention is the same as Vickers hardness, and the hardness (y) may be 300 to 1,000 HV, for example 500 to 800 HV. When the hardness (y) is below the above-mentioned range, the hardness may be insufficient, making it difficult to apply to ultra-thin glass, and when it exceeds the above-mentioned range, the internal structure of the glass may become excessively dense, making it difficult to achieve chemical strengthening through ion exchange.

The ion exchange depth of the glass article of the present invention is 50% or less, for example, 45% or less of the total glass thickness; the thickness is 500 µm or less, for example, 30 to 300 µm; the coefficient of thermal expansion is 4.0 ppm/°C or more, for example, 6 to 20 ppm/°C; and the pencil hardness is 3H or more. In addition, a minimum curvature radius of the glass article of the present invention is 3 mm or less, for example, 1.5 mm or less, as another example, 0.3 to 3 mm, and as yet another example, 0.3 to 1.5 mm. When the minimum curvature radius of the glass article satisfies the above-mentioned range, it is suitable for application to flexible displays according to the development of form factors.

### [Modes of the Invention]

The present invention will be described in more detail below through test examples. However, the following examples are intended only to aid in understanding the invention and do not limit the scope of the invention in any way.

### [Experimental Examples 1 to 9]

The glass compositions of each experimental example were prepared according to Table 1 below. Glass articles manufactured using the glass compositions of each experimental example were heat-treated in an electric oven (100 to 150 °C) for 30 minutes, and then the Vickers hardness thereof was measured according to ASTM E 92 and the results are shown in Table 1 below.

**[Table 1]**

| Components (mol%) | Exp. Ex.1 | Exp. Ex.2 | Exp. Ex.3 | Exp. Ex.4 | Exp. Ex.5 | Exp. Ex.6 | Exp. Ex.7 | Exp. Ex.8 | Exp. Ex.9 |
|---|---|---|---|---|---|---|---|---|---|
| SiO₂ | 70.8 | 69.34 | 67.15 | 68.31 | 66.9 | 64.79 | 65.67 | 64.32 | 62.29 |
| Al₂O₃ | 10.62 | 10.4 | 10.07 | 11.61 | 11.37 | 11.01 | 12.68 | 12.41 | 12.02 |
| Na₂O | 14.02 | 13.73 | 13.3 | 15.37 | 15.05 | 14.58 | 16.78 | 16.43 | 15.91 |
| K₂O | 1.56 | 1.53 | 1.48 | 1.71 | 1.67 | 1.62 | 1.86 | 1.83 | 1.77 |
| MgO | 2.8 | 4.8 | 7.8 | 2.8 | 4.8 | 7.8 | 2.8 | 4.8 | 7.8 |
| SnO₂ | 0.2 | 0.2 | 0.2 | 0.2 | 0.2 | 0.2 | 0.2 | 0.2 | 0.2 |
| [Al₂O₃] / [SiO₂] | 0.15 | 0.15 | 0.15 | 0.17 | 0.17 | 0.17 | 0.19 | 0.19 | 0.19 |
| y (max.) (Hv) | 618.4 | 636.1 | 662.6 | 639.8 | 657.5 | 684.1 | 661.3 | 679.0 | 705.5 |
| y (min.) (Hv) | 514.3 | 521.8 | 532.9 | 530.2 | 537.6 | 548.8 | 546.0 | 553.5 | 564.6 |
| Vickers hardness (Hv) | 560.3 | 584.7 | 593.2 | 588 | 603.9 | 621.2 | 604.6 | 620.6 | 641.6 |

| | | | | | | | | | |
|---|---|---|---|---|---|---|---|---|---|
| y (max.): Maximum value of hardness (y) calculated according to Equation (1) y (min.): Minimum value of hardness (y) calculated according to Equation (1) | | | | | | | | | |

As shown in Table 1 above, the hardness (y) of the glass article of Experimental Examples 1 to 9 matches the Vickers hardness. Therefore, according to the present invention, even without manufacturing the glass article and measuring the hardness thereof using a fractual test, the Vickers hardness of the glass article can be predicted using the hardness value calculated according to Equation (1).

### [Industrial Applicability]

The present invention provides a glass article having excellent mechanical strength. In particular, the present invention enables the hardness of the glass article to be predicted from the composition of the glass article, thereby reducing the time and cost associated with fracture test, while also minimizing variables caused by the measurer or measurement environment, and thus provides a glass article with excellent reliability.

## Claims

1. A glass article with a hardness (y) satisfying the following Equation (1): $y = k \left[MgO\right] + b$ (1) wherein
k is 6.2842±2.5616,
b is c[Al₂O₃] / [SiO₂]+d,
c is 932.5265±139.825,
d is 408.87664±23.87966,
[MgO] is the content of MgO (mol%) based on the total content of the glass article,
[Al₂O₃] is the content of Al₂O₃ (mol%) based on the total content of the glass article, and
[SiO₂] is the content of SiO₂ (mol%) based on the total content of the glass article.

2. The glass article of claim 1, which satisfies the following Equation (2): $\left[ZnO\right] + \left[{Y}_{2}{O}_{3}\right] + \left[{TiO}_{2}\right] + \left[{ZrO}_{2}\right] + \left[{Nb}_{2}{O}_{5}\right] \leq \left[MgO\right] / 2$ (2) wherein
[ZnO] is the content of ZnO (mol%) based on the total content of the glass article,
[Y₂O₃] is the content of Y₂O₃ (mol%) based on the total content of the glass article,
[TiO₂] is the content of TiO₂ (mol%) based on the total content of the glass article,
[ZrO₂] is the content of ZrO₂ (mol%) based on the total content of the glass article,
[Nb₂O₅] is the content of Nb₂O₅ (mol%) based on the total content of the glass article, and
[MgO] is the content of MgO (mol%) based on the total content of the glass article.

3. The glass article of claim 1, which satisfies the following Equation (3): $\left[{Al}_{2}{O}_{3}\right] / \left[{R}_{2}O\right] \leq 1$ (3) wherein
[Al₂O₃] is the content of Al₂O₃ (mol%) based on the total content of the glass article,
[R₂O] is the content of R₂O (mol%) based on the total content of the glass article, and
R is one or more elements selected from the group consisting of Li, Na, and K.

4. The glass article of claim 1, which satisfies the following Equation (4): $\left[GNI\right] / \left[{SiO}_{2}\right] < 0.5$ (4) wherein
[GNI] is the content (mol%) of a glass network intermediate (GNI) based on the total content of the glass article, where GNI is an intermediate oxide having an e value of 60 to 80, e is E/n, E is a dissociation energy required to completely decompose 1 mole of an oxide (MO_{y/x}), and n is an oxygen coordination number of an M atom, and
[SiO₂] is the content of SiO₂ (mol%) based on the total content of the glass article.

5. The glass article of claim 1, which satisfies the following Equation (5): $\left[ZnO\right] < \left[MgO\right] / 2$ (5) wherein
[ZnO] is the content of ZnO (mol%) based on the total content of the glass article, and
[MgO] is the content of MgO (mol%) based on the total content of the glass article.

6. The glass article of claim 1, which comprises 40 to 80 mol% of SiO₂, 5 to 25 mol% of Al₂O₃, 8 to 20 mol% of Na₂O, 0 to 10 mol% of K₂O, and 0 to 10 mol% of MgO, based on the total content of the glass article.

7. The glass article of claim 6, which further comprises 0 to 10 mol% of ZnO, 0 to 0.5 mol% of SnO₂, 0 to 10 mol% of CaO, 0 to 10 mol% of SrO, and 0 to 10 mol% of BaO, based on the total content of the glass article.
